# EUROPEAN PATENT APPLICATION

(11) **EP 1 661 861 A1**
(43) Date of publication of application: **31.05.2006**
(21) Application number: 05024332.8
(22) Date of filing: 08.11.2005
(51) Int. Cl.: C01G 25/00, C09C 1/00

(54) **Process for producing modified stannic oxide sol and stannic oxide/zirconium composite sol**

(30) Priority: 29.11.2004 JP 2004343445
(71) Applicant: NISSAN CHEMICAL INDUSTRIES, LIMITED, Chiyoda-ku Tokyo 101 (JP)
(72) Inventor: Koyama, Yoshinari, Sodegaura-shi, Chiba (JP); Asada, Motoko, Sodegaura-shi, Chiba (JP)
(74) Representative: Hartz, Nikolai

(57) **Abstract**

To provide a process for producing a stable modified sol to be used for a component of a hard coat agent to be applied to the surface of plastic lenses or for other applications. It is a sol containing modified metal oxide particles which have a particle size of from 4.5 to 60 nm and which comprise, as nuclei, colloidal particles (A) having a particle size of from 4 to 50 nm and comprising stannic oxide particles or composite particles of stannic oxide particles and zirconium oxide particles in a weight ratio of ZrO₂:SnO₂ being from 0:1 to 0.50:1, and, as applied on their surface, an alkylamine-containing Sb₂O₅ colloidal particles (B1), or composite colloidal particles (B2) of diantimony pentoxide and silicon dioxide, or tungsten oxide/stannic oxide/silicon dioxide composite colloid (B3), wherein the weight ratio of (B)/(A) is from 0.01 to 0.50 on the basis of the weight ratio of their metal oxides.

## Description

The present invention relates to a process for producing a stable sol of modified stannic oxide colloidal particles or modified stannic oxide/zirconium oxide colloidal particles having a particle size of from 4 to 60 nm and formed by coating the surface of stannic oxide colloidal particles or stannic oxide/zirconium oxide composite colloidal particles with alkyl amine-containing Sb₂O₅ colloidal particles, composite colloidal particles of diantimony pentoxide and silicon dioxide or composite colloidal particles of tungsten oxide, stannic oxide and silicon dioxide. The sol of the present invention is useful as a component of a hard coat agent to be applied to the surface of plastic lenses or for various other applications.

In order to improve the surface of plastic lenses which have been commonly used in recent years, a sol of a metal oxide having a high refractive index is used as a component of a hard coat agent to be applied to the surface.

A hard coat agent containing particles of an oxide of metal such as Al, Ti, Zr, Sn or Sb of from 1 to 300 nm, is disclosed (e.g. Patent Document 1). A stable sol composed solely of tungsten oxide has not yet been known, but a sol having a molar ratio of WO₃:SiO₂:M₂O (wherein M represents an alkali metal atom or an ammonium group) being 4 to 15:2 to 5:1 obtainable by adding a silicate, has been proposed (e.g. Patent Document 2). A silicic acid/stannic acid composite sol having a molar ratio of Si:Sn being 2 to 1,000:1 has been proposed (e.g. Patent Document 3).

A stable sol comprising a modified metal oxide colloid having a particle size of from 4.5 to 60 nm, formed by coating the surface of colloidal particles of an oxide of a metal having an atomicity of 3, 4 or 5, having a particle size of from 4 to 50 nm, as nuclei, with colloidal particles of a tungsten oxide/stannic oxide composite having a WO₃/SnO₂ weight ratio of from 0.5 to 100 and a particle size of from 2 to 7 nm, wherein such total metal oxides are contained in an amount of from 2 to 50 wt%, has been proposed (e.g. Patent Document 4).

A stable sol of modified SnO₂/ZrO₂ composite comprising particles of a structure formed by coating the surface of SnO₂/ZrO₂ composite colloid particles, as nuclei, having a weight ratio of from 0.02 to 1.0 as ZrO₂/SnO₂ and a particle size of from 4 to 50 nm, with WO₃/SnO₂ composite colloidal particles having a WO₃/SnO₂ weight ratio of from 0.5 to 100 and a particle size of from 2 to 7 nm, has been proposed (e.g. Patent Document 5).

A stable modified metal oxide sol having a primary particle size of from 2 to 100 nm is disclosed which contains particles (C) obtained by coating the surface of colloidal particles (A) of a metal oxide having a primary particle size of from 2 to 60 nm, as nuclei, with a coating material (B) composed of colloidal particles of an acidic oxide, wherein the particles (C) are contained in a proportion of from 2 to 50 wt% as calculated as the metal oxide. And, a sol is disclosed wherein the metal oxide as nuclei is SnO₂ particles or SnO₂/ZrO₂ composite colloidal particles, and the coating material is alkyl amine-containing Sb₂O₅ particles (the M/Sb₂O₅ molar ratio: 0.02 to 4.00)(e.g. Patent Document 6).

A process for producing a silicic acid/antimonic acid composite sol or a silicic acid/stannic acid composite sol, is disclosed which comprises mixing an alkali silicate aqueous solution or a silicic acid sol with an alkali antimonate aqueous solution or an alkali stannate aqueous solution so that the molar ratio of Si:Sb or Si:Sn will be 2 to 1,000:1, and then subjecting the mixed solution to removal of cations by means of an acidic ion exchanger (e.g. Patent Document 7).

A silicon dioxide/antimony oxide composite sol is disclosed wherein antimony oxide colloidal particles containing from 0.1 to 50 wt%, as SiO₂, of an inorganic silicic acid compound, are dispersed in a dispersion medium (e.g. Patent Document 8).
Patent Document 1: JP-B-63-37142 (claims)
Patent Document 2: JP-A-54-52686 (claims)
Patent Document 3: JP-B-50-40119 (claims)
Patent Document 4: JP-A-3-217230 (claims)
Patent Document 5: JP-A-6-24746 (claims)
Patent Document 6: JP-A-2001-122621 (claims)
Patent Document 7: JP-B-50-40119 (claims)
Patent Document 8: JP-B-7-25549 (claims)

If a conventional metal oxide sol, particularly a cationic metal oxide sol, is used as a component for a hard coat agent, not only the stability of the obtained hard coat agent is inadequate, but also the transparency, adhesion, weather resistance, etc., of a cured coating film of this hard coat agent are inadequate. Further, in a case where a Sb₂O₅ sol is used as a component of a hard coat agent, since the refractive index of Sb₂O₅ is from about 1.65 to 1.70, when the refractive index of the plastic material of a lens is at least 1.6, the refractive index of a cured coating film can no longer be sufficiently improved by such a Sb₂O₅ sol.

The above-mentioned tungsten oxide sol disclosed in JP-A-54-52686 is obtained by adding a silicate to an aqueous solution of tungstic acid obtained by cation removal treatment of an aqueous solution of a tungstate and is stable only in a strongly acidic condition, and if it is used as a component of a hard coat agent, the effect for improving the refractive index of a coating film is small.

The above-mentioned silicic acid/stannic acid composite sol disclosed in JP-B-50-40119 is obtained by cation removal treatment of a mixed aqueous solution of an alkali silicate and an alkali stannate. Like the above case, if this composite sol is used as a component of a hard coat agent, the effect for improving the refractive index of a coating film is small.

The above-mentioned modified metal oxide sol disclosed in JP-A-3-217230 has a refractive index of at least 1.7, is stable, can be used as a component of a hard coat agent for plastic lenses and is capable of substantially satisfying the performance required for a hard coat film, for example, the performance such as scratch resistance, transparency, adhesion, water resistance, weather resistance, etc. However, when the refractive index of the plastic material of lenses is 1.7 or higher, the refractive index of the cured coating film will not be improved sufficiently.

The above-mentioned modified stannic oxide/zirconium oxide sol disclosed in JP-A-6-24746 has a refractive index of at least 1.7, is stable, can be used as a component of a hard coat agent for plastic lenses and is capable of substantially satisfying the performance required for a hard coat film, for example, the performance such as scratch resistance, transparency, adhesion, etc. However, also with this sol, when the refractive index of the plastic material of lenses is 1.7 or higher, the refractive index of the cured coating film will not be improved sufficiently.

The present invention is to provide a stable sol of modified stannic oxide or modified stannic oxide/zirconium oxide, which is a sol to further improve the state such as a scratch resistance, transparency, adhesion, water resistance, weather resistance, etc., when a modified metal oxide as disclosed in JP-A-3-217230 or JP-A-6-24746 is formed into a hard coat film, and which is stable within a wide pH range and has a high refractive index (at least 1.9), and to provide a metal oxide sol which can be used as mixed to a coating material for such a hard coat as a component to improve the performance of the hard coat film formed on a plastic lens surface.

In a first aspect, the present invention provides a process for producing a stable sol of modified stannic oxide colloidal particles, which comprises the following steps (a1), (b1), (c1) and (d1):
step (a1): a step of preparing a stannic oxide aqueous sol containing colloidal particles of stannic oxide having a particle size of from 4 to 50 nm at a concentration of from 1 to 50 wt% as SnO₂,
step (b1): a step of subjecting the stannic oxide aqueous sol obtained in the above step (a1) to hydrothermal treatment under a pressure of from 0.1 to 40 MPa at a temperature of from 100 to 350°C for from 0.01 to 100 hours,
step (c1): a step of mixing the stannic oxide aqueous sol obtained in step (b1) and an alkylamine-containing Sb₂O₅ aqueous sol having a molar ratio of M/Sb₂O₅ (where M is an amine molecule) being from 0.02 to 4.00 and a particle size of from 1 to 20 nm, in a weight ratio of Sb₂O_{5/}SnO₂ being from 0.01 to 0.50, as calculated as their metal oxides, and
step (d1) : a step of aging the aqueous medium obtained in step (c1) at from 20 to 300°C for from 0.1 to 50 hours.

In a second aspect, the present invention provides a process for producing a stable sol of modified stannic oxide/zirconium oxide composite colloidal particles, which comprises the following steps (a2), (b2), (c2) and (d2):
step (a2): a step of preparing an aqueous sol of stannic oxide/zirconium oxide composite colloid having a particle size of from 4 to 50 nm by mixing a stannic oxide aqueous sol having a particle size of from 4 to 50 nm and a SnO₂ concentration of from 0.5 to 50 wt% and an aqueous solution of an oxyzirconium salt having a concentration of from 0.1 to 50 wt% as calculated as ZrO₂, in a weight ratio of from 0.001 to 0.50 as ZrO₂/SnO₂, and heating the obtained mixed solution at from 60 to 100°C for from 0.1 to 50 hours,
step (b2): a step of subjecting the stannic oxide/zirconium oxide composite aqueous sol obtained in the above step (a2) to hydrothermal treatment under a pressure of from 0.1 to 40 MPa at a temperature of from 100 to 350°C for from 0.01 to 100 hours,
step (c2): a step of mixing the stannic oxide/zirconium oxide composite aqueous sol obtained in step (b2) and an alkylamine-containing Sb₂O₅ aqueous sol having a molar ratio of M/Sb₂O₅ (where M is an amine molecule) being from 0.02 to 4.00 and a particle size of from 1 to 20 nm, in a weight ratio of Sb₂O₅/(SnO₂+ZrO₂) being from 0.01 to 0.50, as calculated as their metal oxides, and
step (d2): a step of aging the aqueous medium obtained in step (c2) at from 20 to 300°C for from 0.1 to 50 hours.

In a third aspect, the present invention provides a process for producing a stable sol of modified stannic oxide colloidal particles, which comprises the following steps (a3), (b3), (c3) and (d3):
step (a3): a step of preparing a stannic oxide aqueous sol containing colloidal particles of stannic oxide having a particle size of from 4 to 50 nm at a concentration of from 1 to 50 wt% as SnO₂,
step (b3): a step of subjecting the stannic oxide aqueous sol obtained in the above step (a3) to hydrothermal treatment under a pressure of from 0.1 to 40 MPa at a temperature of from 100 to 350°C for from 0.01 to 100 hours,
step (c3): a step of mixing the stannic oxide aqueous sol obtained in step (b3) and an aqueous sol containing composite colloidal particles of diantimony pentoxide and silicon dioxide having a molar ratio of SiO₂/Sb₂O₅ being from 0.55 to 55 and a particle size of at most 5 nm, in a weight ratio of (Sb₂O₅+SiO₂)/SnO₂ being from 0.01 to 0.50, as calculated as their metal oxides, and
step (d3): a step of aging the aqueous medium obtained in step (c3) at from 20 to 300°C for from 0.1 to 50 hours.

In a forth aspect, the present invention provides a process for producing a stable sol of modified stannic oxide/zirconium oxide composite colloidal particles, which comprises the following steps (a4), (b4), (c4) and (d4) :
step (a4): a step of preparing an aqueous sol of stannic oxide/zirconium oxide composite colloid having a particle size of from 4 to 50 nm by mixing a stannic oxide aqueous sol having a particle size of from 4 to 50 nm and a SnO₂ concentration of from 0.5 to 50 wt% and an aqueous solution of an oxyzirconium salt having a concentration of from 0.1 to 50 wt% as calculated as ZrO₂, in a weight ratio of from 0.001 to 0.50 as ZrO₂/SnO₂, and heating the obtained mixed solution at from 60 to 100°C for from 0.1 to 50 hours,
step (b4): a step of subjecting the stannic oxide/zirconium oxide composite aqueous sol obtained in the above step (a4) to hydrothermal treatment under a pressure of from 0.1 to 40 MPa at a temperature of from 100 to 350°C for from 0.01 to 100 hours,
step (c4): a step of mixing the stannic oxide/zirconium oxide composite aqueous sol obtained in step (b4) and an aqueous sol containing composite colloidal particles of diantimony pentoxide and silicon dioxide having a molar ratio of SiO_{2/}Sb₂O₅ being from 0.55 to 55 and a particle size of at most 5 nm, in a weight ratio of (Sb₂O₅+SiO₂) / (SnO₂+ZrO₂) being from 0.01 to 0.50, as calculated as their metal oxides, and
step (d4): a step of aging the aqueous medium obtained in step (c4) at from 20 to 300°C for from 0.1 to 50 hours.

In a fifth aspect, the present invention provides a process for producing a stable sol of modified stannic oxide colloidal particles, which comprises the following steps (a5) , (b5), (c5) and (d5) :
step (a5): a step of preparing a stannic oxide aqueous sol containing colloidal particles of stannic oxide having a particle size of from 4 to 50 nm at a concentration of from 1 to 50 wt% as SnO₂,
step (b5): a step of subjecting the stannic oxide aqueous sol obtained in the above step (a5) to hydrothermal treatment under a pressure of from 0.1 to 40 MPa at a temperature of from 100 to 350°C for from 0.01 to 100 hours,
step (c5): a step of mixing the stannic oxide aqueous sol obtained in step (b5) and an aqueous sol containing composite colloidal particles of tungsten oxide/stannic oxide/silicon dioxide having a particle size of from 2 to 7 nm, a weight ratio of WO₃/SnO₂ being from 0.1 to 100 and a weight ratio of SiO₂/SnO₂ being from 0.1 to 100, in a weight ratio of (SnO₂+WO₃+SiO₂)/SnO₂ being from 0.01 to 0.50, as calculated as their metal oxides, and
step (d5): a step of aging the aqueous medium obtained in step (c5) at from 20 to 300°C for from 0.1 to 50 hours.

In a sixth aspect, the present invention provides a process for producing a stable sol of modified stannic oxide/zirconium oxide composite colloidal particles, which comprises the following steps (a6), (b6), (c6) and (d6) :
step (a6): a step of preparing an aqueous sol of stannic oxide/zirconium oxide composite colloid having a particle size of from 4 to 50 nm by mixing a stannic oxide aqueous sol having a particle size of from 4 to 50 nm and a SnO₂ concentration of from 0.5 to 50 wt% and an aqueous solution of an oxyzirconium salt having a concentration of from 0.1 to 50 wt% as calculated as ZrO₂, in a weight ratio of from 0.001 to 0.50 as ZrO₂/SnO₂, and heating the obtained mixed solution at from 60 to 100°C for from 0.1 to 50 hours,
step (b6): a step of subjecting the stannic oxide/zirconium oxide composite aqueous sol obtained in the above step (a6) to hydrothermal treatment under a pressure of from 0.1 to 40 MPa at a temperature of from 100 to 350°C for from 0.01 to 100 hours,
step (c6): a step of mixing the stannic oxide/zirconium oxide composite aqueous sol obtained in step (b6) and an aqueous sol containing composite colloidal particles of tungsten oxide/stannic oxide/silicon dioxide having a particle size of from 2 to 7 nm, a weight ratio of WO₃/SnO₂ being from 0.1 to 100 and a weight ratio of SiO₂/SnO₂ being from 0.1 to 100, in a weight ratio of (SnO₂+WO₃+SiO₂)/(SnO₂+ZrO₂) being from 0.01 to 0.50, as calculated as their metal oxides, and
step (d6): a step of aging the aqueous medium obtained in step (c6) at from 20 to 300°C for from 0.1 to 50 hours.

According to the present invention, it is possible to overcome various drawbacks of conventional metal oxide colloid (dispersibility, weather resistance, long term stability, compatibility with a hard coat agent, bonding properties) by the effects of coating with an alkali antimonate, an alkali component-containing diantimony pentoxide colloid or a coating material having a silicon dioxide component further added thereto, a diantimony pentoxide/silicon dioxide composite colloid, or a tungsten oxide/stannic oxide/silicon dioxide composite colloid, and it is possible to obtain an excellent modified metal oxide. By using the modified stannic oxide and/or stannic oxide/zirconium oxide composite colloid of the present invention as a component of a hard coat agent, it is possible to overcome yellowing by irradiation with ultraviolet rays or problems in film hardness, water resistance, moisture resistance or compatibility, as observed when a conventional metal oxide sol is employed.

It is an object of the present invention to provide a stable sol of colloidal particles of modified metal oxide excellent in water resistance and weather resistance performance and to provide a sol which can be used as mixed to a coating material for a hard coat as a component to improve the performance of the hard coat film applied on a plastic lens surface.

The sol of surface-modified metal oxide colloidal particles obtainable by the present invention is colorless transparent, and the refractive index calculated from its dried coating film shows at least 1.9. Further, the bond strength and hardness are respectively high, and the weather resistance, antistatic properties, heat resistance, abrasion resistance, etc. are also good. Further, as compared with conventional one, it is remarkably improved particularly in weather resistance and moisture resistance.

This sol is stable within a pH range of from 3 to 11.5 and thus presents a sufficient stability to be supplied as an industrial product.

With this sol, the colloidal particles are negatively charged and thus is excellent in admixability with a sol or the like composed of other negatively charged colloidal particles. For example, it can be mixed stably with a silicon dioxide sol, a diantimony pentoxide sol, an anionic or nonionic surfactant, an aqueous solution of e.g. polyvinyl alcohol, an anionic or nonionic resin emulsion, water glass, an aqueous solution of e.g. aluminum phosphate, a hydrolyzate of ethyl silicate, a silane coupling agent such as γ-glycidoxytrimethoxysilane or its hydrolyzate.

The sol of the present invention having such a nature is particularly effective as a component to improve the refractive index, dye-affinity, chemical resistance, water resistance, moisture resistance, light resistance, weather resistance, abrasion resistance, etc. to form a hard coat film on a plastic lens, but it may be used for various other applications.

By applying the sol on the surface of e.g. organic fibers, fiber products or paper, it is possible to improve the flame retardancy, antiskid properties, antistatic properties, dye-affinity, etc. of such materials. Further, such a sol may be used as a binding agent for e.g. ceramic fibers, glass fibers, ceramics, etc. Further, it may be used as mixed to e.g. various coating materials or various adhesives, whereby the water resistance, chemical resistance, light resistance, weather resistance, abrasion resistance, flame retardancy, etc. of their cured coating films may be improved. Further, such a sol may also be employed as a surface treating agent for e.g. metallic material, ceramic material, glass material or plastic material. Further, it is useful also as a catalyst component.

Now, the present invention will be described in detail with reference to the preferred embodiments.

The sol obtainable in the first or second aspect of the present invention is a sol containing modified metal oxide particles which have a particle size of from 4.5 to 60 nm and which comprises, as nuclei, colloidal particles (A) having a particle size of from 4 to 50 nm and comprising stannic oxide particles (A1) heat-treated at from 100 to 350°C for from 0.01 to 100 hours under pressure or composite particles (A2) of stannic oxide particles and zirconium oxide particles in a weight ratio of ZrO₂:SnO₂ being from 0.001:1 to 0.50:1, and, as applied on their surface, an alkylamine-containing Sb₂O₅ colloidal particles (B1) having a molar ratio of M/Sb₂O₅ (where M is an amine molecule) being from 0.02 to 4.00 and a particle size of from 1 to 20 nm, wherein the weight ratio of (B1)/[(A1) or (A2)] is from 0.01 to 0.50 on the basis of the weight ratio of their metal oxides.

Further, the sol obtainable in the third or forth aspect of the present invention is a sol containing modified metal oxide particles which have a particle size of from 4.5 to 60 nm and which comprises, as nuclei, colloidal particles (A) having a particle size of from 4 to 50 nm and comprising stannic oxide particles (A1) heated and aged at from 100 to 350°C for from 0.01 to 100 hours under pressure or composite particles (A2) of stannic oxide particles and zirconium oxide particles in a weight ratio of ZrO₂:SnO₂ being from 0.001:1 to 0.50:1, and, as applied on their surface, composite colloidal particles (B2) of diantimony pentoxide and silicon dioxide, having a molar ratio of SiO₂/Sb₂O₅ being from 0.55 to 55 and a particle size of at most 5 nm, wherein the weight ratio of (B2)/[(A1) or (A2)] is from 0.01 to 0.50 on the basis of the weight ratio of their metal oxides.

And, the sol obtainable in the fifth or sixth aspect of the present invention is a sol containing modified metal oxide particles which have a particle size of from 4.5 to 60 nm and which comprises, as nuclei, colloidal particles (A) having a particle size of from 4 to 50 nm and comprising stannic oxide particles (A1) heated and aged at from 100 to 350°C for from 0.01 to 100 hours under pressure or composite particles (A2) of stannic oxide particles and zirconium oxide particles in a weight ratio of ZrO₂:SnO₂ being from 0.001:1 to 0.50:1, and, as applied on their surface, composite colloidal particles (B3) of tungsten oxide, stannic oxide and silicon dioxide having a weight ratio of WO₃/SnO₂ being from 0.1 to 100 and a weight ratio of SiO₂/SnO₂ being from 0.1 to 100, wherein the weight ratio of (B3)/[(A1) or (A2)] is from 0.01 to 0.50 on the basis of the weight ratio of their metal oxides.

The sizes of the particles in the above sols are represented by the particle sizes as observed by an electron microscope.

The stannic oxide colloidal particles as nucleic particles (A1) to be used for the production of the sol of the present invention can easily be prepared in the form of a sol of colloid particles having a particle size of from about 4 to 50 nm by a known method, for example, a method so-called an ion exchange method, a peptization method, a hydrolytic method or a reaction method.

The ion exchange method may, for example, be a method of treating a stannate such as sodium stannate with a hydrogen-type cation exchange resin, or a method of treating a stannic salt such as stannic chloride or stannic nitrate with a hydroxyl group-type anion exchange resin. The peptization method may, for example, be a method wherein a stannic hydroxide gel obtained by neutralizing a stannic salt with a base or neutralizing stannic acid with hydrochloric acid, is washed followed by peptization with an acid or base. The hydrolytic method may, for example, be a method of hydrolyzing a tin alkoxide, or a method of hydrolyzing a basic stannic chloride under heating, followed by removal of an unnecessary acid. The reaction method may, for example, be a method of reacting a metallic tin powder with an acid.

In the present invention, the stannic oxide aqueous sol having a SnO₂ concentration of from 1 to 50 wt%, produced by the above method, may be used as it is, but is preferably prepared by hydrothermal treatment at from 100 to 350°C for from 0.01 to 100 hours under pressure. The hydrothermal treatment may, for example, be carried out by introducing the above-mentioned tin oxide aqueous sol into an autoclave and treated under a pressure of from 0.1 to 40 MPa (megapascal) at a temperature of from 100 to 350°C for from 0.01 to 100 hours.

The medium for such stannic oxide sol may be either water or a hydrophilic organic solvent, but an aqueous sol wherein the medium is water is preferred. Further, the pH of the sol is preferably a value where the sol is stabilized, and it is usually at a level of from 0.2 to 11.5. So far as the object of the present invention is accomplished, the stannic oxide sol may contain an optional component, for example, an alkaline substance, an acidic substance or an oxycarboxylic acid to stabilize the sol. The concentration of the stannic oxide sol to be used is from about 0.5 to 50 wt% as stannic oxide. This concentration should better be low, preferably from 1 to 30 wt%.

The stannic oxide/zirconium oxide composite sol (A2) as nucleic particles to be used for the production of a sol of the present invention is prepared by a process of mixing an oxyzirconium salt having a concentration of from 0.1 to 50 wt% to the above-mentioned stannic oxide sol having a particle size of from 4 to 50 nm and a SnO₂ concentration of from 0.5 to 50 wt% at a temperature of from 5 to 100°C for from 0.1 to 50 hours so that the weight ratio of ZrO₂/SnO₂ will be from 0.001 to 0.5, and then, heating the mixture at a temperature of from 60 to 100°C for from 0.1 to 50 hours, whereby an aqueous sol of stannic oxide/zirconium oxide composite colloid having a particle size of from 4 to 50 nm, can be obtained.

The stannic oxide sol to be used here, may be a sol having hydrothermal treatment preliminarily applied or a sol having no such hydrothermal treatment applied.

The aqueous sol of stannic oxide/zirconium oxide composite colloid thus obtained is subjected to hydrothermal treatment under a pressure of from 0.1 to 40 MPa at a temperature of from 100 to 350°C for from 0.01 to 100 hours.

The above-mentioned oxyzirconium salt may, for example, be ammonium zirconyl carbonate, potassium zirconyl carbonate, zirconium oxychloride, zirconium oxynitrate, zirconium oxysulfate, zirconium oxyacetate or zirconium oxycarbonate. Such an oxyzirconium salt may be used in a solid form or in the form of an aqueous solution. However, it is preferably employed in the form of an aqueous solution having a concentration of from 0.5 to 50 wt%, preferably from 0.5 to 30 wt%, as ZrO₂.

Further, even a salt insoluble in water like zirconyl oxycarbonate may be used in a case where stannic oxide is an acidic sol.

As the stannic oxide sol, it is particularly preferred to employ an alkaline sol stabilized with an organic base such as an amine, and the mixing with the oxyzirconium salt is preferably carried out at from 5 to 100°C, preferably from room temperature (20°C) to 60°C. Such mixing will be carried out by adding the oxyzirconium salt to the stannic oxide sol with stirring, or by adding the stannic oxide sol to an aqueous solution of the oxyzirconium salt. The latter is preferred. This mixing is required to be carried out sufficiently, preferably for from 0.5 to 3 hours.

The alkylamine-containing diantimony pentoxide colloid (B1) to be used as a coating sol of the present invention may be obtained by the following method (such as an oxidation method or an acid decomposition method). The acid decomposition method may, for example, be a method wherein an alkali antimonate is reacted with an inorganic acid, followed by peptization with an amine (JP-A-60-41536, JP-A-61-227918, JP-A-2001-123115). The oxidation method may, for example, be a method wherein diantimony trioxide is oxidized with hydrogen peroxide in the presence of an amine or an alkali metal (JP-B-57-11848, JP-A-59-232921), or a method wherein diantimony trioxide is oxidized with hydrogen peroxide, and then, an amine or an alkali metal is added.

The amine or the above amine-containing diantimony pentoxide colloid may, for example, be ammonium, a quaternary ammonium or a water-soluble amine. Preferred examples thereof may be an alkylamine such as isopropylamine, diisopropylamine, n-propylamine or diisobutylamine, an aralkylamine such as benzylamine, an alicyclic amine such as piperidine, an alkanolamine such as monoethanolamine or triethanolamine, and a quaternary ammonium such as tetramethylammonium hydroxide. Particularly preferred are diisopropylamine and diisobutylamine. The molar ratio of the alkali component to diantimony pentoxide in the above amine-containing diantimony pentoxide colloid is preferably M/Sb₂O₅ being from 0.02 to 4.00. If the molar ratio is smaller than this range, the stability of the colloid tends to be poor, and if it is too high, the water resistance of a dried coating film obtainable by using such a sol tends to be low, such being practically undesirable.

The amine-containing diantimony pentoxide colloidal particles (B1) are fine colloidal particles of diantimony pentoxide, and with respect to the particle size, the oligomer or primary particle size is from about 1 to 20 nm as observed by an electron microscope. The amine component is preferably an alkylamine salt such as diisopropylamine, and the molar ratio of amine/Sb₂O₅ is from 0.02 to 4.00.

As the above coating material, alkylamine-containing silicon dioxide particles may further be added to the amine-containing diantimony pentoxide colloidal particles.

The composite colloid (B2) of diantimony pentoxide and silicon dioxide to be used as the coating sol of the present invention may be obtained by the following known method (e.g. JP-B-50-40119). Namely, it may be obtained by mixing an aqueous alkali silicate solution or a silicic acid solution with an aqueous alkali antimonate solution, followed by removal of cations by a cation exchange resin.

As the antimony raw material, an aqueous potassium antimonate solution may preferably be employed. As the silicon dioxide raw material, sodium silicate, potassium silicate, or active silicic acid obtainable by cation exchange thereof, may be employed. The molar ratio of SiO₂/Sb₂O₅ is from 0.55 to 55. With respect to the particle size, the oligomer or the primary particle size is at most 5 nm, preferably from 1 to 5 nm, as observed by an electron microscope.

The composite colloidal particles (B3) of tungsten oxide, stannic oxide and silicon dioxide, to be used as the coating sol of the present invention, may be obtained by the following method.

They may be obtained by a method wherein an aqueous solution containing a tungstate, a stannate and a silicate in a weight ratio of WO₃/SnO₃ being from 0.1 to 100 and in a weight ratio of SiO₂/SnO₂ being from 0.1 to 100, is prepared, and cations present in the obtained aqueous solution are removed.

The total concentration of WO₃, SnO₂ and SiO₂ contained in this sol is usually at most 40 wt%, practically preferably at least 2 wt%, more preferably from 5 to 30 wt%.

So long as the purpose of the present invention can be accomplished, other optional components may be incorporated. Particularly when an oxycarboxylic acid is incorporated in an amount of at most about 30 wt% based on the total amount of WO₃, SnO₂ and SiO₂, a further improved sol may be obtained. As an example of the oxycarboxylic acid to be employed, lactic acid, tartaric acid, citric acid, gluconic acid, malic acid or glycolic acid may be mentioned.

The sol may be present stably without substantially containing an alkali component. However, it may be possible to stabilize it by incorporating an alkali component. Such an alkali component may, for example, be a hydroxide of an alkali metal such as Li, Na, K, Rb or Cs, NH₄, an alkylamine such as ethylamine, triethylamine, isopropylamine or n-propylamine, an aralkylamine such as benzylamine, an alicyclic amine such as piperidine, or an alkanolamine such as monoethanolamine or triethanolamine. Such an alkali component may be incorporated in an amount of at most about 30 wt%, based on the total amount of WO₃, SnO₂ and SiO₂. Further, these alkali components may be incorporated as a mixture of two or more of them.

This sol is a liquid showing a pH of from 1 to 9, is colorless transparent or has a slightly colloidal color. And, it is stable for at least three months at room temperature and for at least one month even at 60°C, and no precipitate will be formed in this sol, or this sol is free from viscosity increase or gelation.

The tungstate, stannate and silicate to be used for the preparation of this sol may, for example, be the above-mentioned tungstate, stannate and silicate of an alkali metal, ammonium or amine. Particularly preferred are sodium tungstate (Na₂WO₄·2H₂O), sodium stannate (Na₂SnO₃·3H₂O) and sodium silicate (water glass). Further, it is also possible to use one having tungsten oxide, tungstic acid, stannic acid, silicic acid, etc. dissolved in an aqueous solution of an alkali metal hydroxide. As a method of dissolving the respective powders of a tungstate, stannate and silicate in water to prepare the aqueous solution, a method of mixing an aqueous tungstate solution, an aqueous stannate solution and an aqueous silicate solution to prepare the aqueous solution, or a method of adding powders of a tungstate and stannate and an aqueous solution of a silicate to water to prepare the aqueous solution, may, for example, be mentioned. As the aqueous solution of a tungstate, one having a concentration of from 0.1 to 15 wt% as WO₃, is preferred, but one having a higher concentration may also be used. As an aqueous solution of a stannate, one having a SnO₂ concentration of from 0.1 to 30 wt% is preferred, but one having a higher concentration may also be used. As an aqueous solution of a silicate, one having a SiO₂ concentration of from 0.1 to 30 wt% is preferred, but one having a higher concentration may also be used.

It is preferred to carry out the preparation of the aqueous solution with stirring at a temperature of from room temperature to 100°C, preferably from room temperature to 60°C. The aqueous solution to be mixed preferably has a weight ratio of WO₃/SnO₂ being from 0.1 to 100, and a weight ratio of SiO₂/SnO₂ being from 0.1 to 100. Then, cations present in the aqueous solution thus obtained are removed to obtain an aqueous sol. As a treating method for removal of cations, a method of contacting with a hydrogen type ion exchanger or salting out may be employed: The hydrogen type cation exchanger to be used here may be one which is commonly used, and preferably, a commercially available hydrogen type cation exchange resin may be employed.

If this sol has a low concentration, the concentration of the sol may be increased as the case requires, by subjecting this aqueous sol to a common concentration method such as a distillation method or an ultrafiltration method. Particularly preferred is the ultrafiltration method. Also in such concentration, the temperature of the sol is preferably maintained at a level of at most about 100°C, particularly preferably at most 60°C.

The modified stannic oxide colloidal particles or the modified stannic oxide/zirconium oxide composite colloidal particles having the surface coated with the amine-containing Sb₂O₅ colloid (B1) of the present invention, are negatively charged in the sol.

The above stannic oxide (A1) and the stannic oxide/zirconium oxide composite colloidal particles (A2) are positively charged, while the Sb₂O₅ colloid is negatively charged. Accordingly, it is considered that by the mixing, the negatively charged Sb₂O₅ colloid is electrically attracted around the positively charged stannic oxide or stannic oxide/zirconium oxide composite colloidal particles, and the Sb₂O₅ colloid is bonded by chemical bonding to the surface of the positively charged colloidal particles, so that the surface of the positively charged particles, as nuclei, is covered with negatively charged Sb₂O₅, to form the modified stannic oxide or stannic oxide/zirconium oxide composite colloidal particles.

When the stannic oxide or stannic oxide/zirconium oxide composite colloidal particles having a particle size of from 4 to 50 nm, as the nucleic sol, and the amine-containing Sb₂O₅ colloid (B1) as the coating sol, are mixed, if the metal oxide of the coating sol is less than 1 part by weight per 100 parts by weight of the metal oxide (SnO₂ or ZrO₂+SnO₂) of the nucleic sol, a stable sol cannot be obtained. This indicates that if the Sb₂O₅ colloid is inadequate, the coverage of the surface of the stannic oxide or stannic oxide/zirconium oxide composite colloidal particles, as nuclei, tends to be inadequate, whereby flocculation of the formed colloidal particles is likely to take place, and the formed sol will be instable. Accordingly, the amount of the Sb₂O₅ colloidal particles to be mixed may be smaller than the amount to cover the entire surface of the stannic oxide or stannic oxide/zirconium oxide composite colloidal particles, but at least the minimum amount required to form a stable sol of the modified stannic oxide or stannic oxide/zirconium oxide composite colloidal particles. When the Sb₂O₅ colloidal particles in an amount exceeding the amount to be used for such surface coverage is employed in the above mixing, the resulting sol is nothing more than a stable mixed sol comprising the Sb₂O₅ colloidal sol and the sol of the formed modified stannic oxide or stannic oxide/zirconium oxide composite colloidal particles.

To modify the stannic oxide or stannic oxide/zirconium oxide composite colloidal particles by the surface coverage, the amount of the Sb₂O₅ colloid (B1) to be employed is preferably at most 50 parts by weight as the metal oxide in the coating sol, per 100 parts by weight of the metal oxide (SnO₂ or ZrO₂+SnO₂) in the nucleic sol.

The modified stannic oxide or modified stannic oxide/zirconium oxide composite colloidal particles having the surface covered with a composite colloid (B2) of diantimony pentoxide and silicon dioxide of the present invention, are negatively charged in the sol.

The above stannic oxide or stannic oxide/zirconium oxide composite colloidal particles are positively charged, while the composite colloid of diantimony pentoxide and silicon dioxide is negatively charged. Accordingly, it is considered that by the mixing, the negatively charged composite colloid of diantimony pentoxide and silicon dioxide is electrically attracted around the positively charged stannic oxide or stannic oxide/zirconium oxide composite colloidal particles, and the composite colloid of diantimony pentoxide and silicon dioxide is bonded by chemical bonding on the surface of the positively charged colloidal particles, so that the surface of the positively charged particles, as nuclei, is covered with the negatively charged composite colloid of diantimony pentoxide and silicon dioxide, to form the modified stannic oxide or stannic oxide/zirconium oxide composite colloidal particles.

When stannic oxide or stannic oxide/zirconium oxide composite colloidal particles having a particle size of from 4 to 50 nm, as a nucleic sol, and the composite colloid (B2) of diantimony pentoxide and silicon dioxide, as the coating sol, are mixed if the metal oxide of the coating sol is less than 1 part by weight per 100 parts by weight of the metal oxide (SnO₂ or ZrO₂+SnO₂) of the nucleic sol, a stable sol cannot be obtained. This indicates that if the amount of the composite colloid of diantimony pentoxide and silicon dioxide is inadequate, the coverage of the surface of the stannic oxide or stannic oxide/zirconium oxide composite colloidal particles, as nuclei, by the colloidal particles of such a composite tends to be inadequate, whereby flocculation of the formed colloidal particles is likely to take place, and the formed sol will be instable. Accordingly, the amount of the composite colloidal particles of diantimony pentoxide and silicon dioxide to be mixed, may be smaller than the amount to cover the entire surface of the stannic oxide or stannic oxide/zirconium oxide composite colloidal particles, but is at least the minimum amount required to form a stable sol of the modified stannic oxide or stannic oxide/zirconium oxide composite colloidal particles. When the composite colloidal particles of diantimony pentoxide and silicon dioxide in an amount exceeding the amount to be used for such surface coverage, are employed in the above mixing, the resulting sol will be nothing more than a stable mixed sol comprising a sol of the composite colloid of diantimony pentoxide and silicon dioxide and a sol of the formed modified stannic oxide or stannic oxide/zirconium oxide composite colloidal particles.

To modify stannic oxide or stannic oxide/zirconium oxide composite colloidal particles by such surface coverage, the amount of the composite colloid (B2) of diantimony pentoxide and silicon dioxide to be used, is preferably at most 50 parts by weight as the metal oxide in the coating sol, per 100 parts by weight of the metal oxide (SnO₂ or ZrO₂+SnO₂) in the nucleic sol.

The modified stannic oxide or modified stannic oxide/zirconium oxide composite colloidal particles having the surface covered with a composite colloid (B3) of tungsten oxide, stannic oxide and silicon dioxide of the present invention, are negatively charged in the sol.

The above stannic oxide or stannic oxide/zirconium oxide composite colloidal particles are positively charged while the composite colloid of tungsten oxide, stannic oxide and silicon dioxide, is negatively charged. Accordingly, it is considered that by the mixing, the negatively charged composite colloid of tungsten oxide, stannic oxide and silicon dioxide, is electrically attracted around the positively charged stannic oxide or stannic oxide/zirconium oxide composite colloidal particles, and the composite colloid of tungsten oxide, stannic oxide and silicon dioxide, is bonded by chemical bonding on the surface of the positively charged colloidal particles, so that the surface of the positively charged particles as nuclei, is covered by the negatively charged composite colloid of tungsten oxide, stannic oxide and silicon dioxide, to form the modified stannic oxide or stannic oxide/zirconium oxide composite colloidal particles.

When the stannic oxide or stannic oxide/zirconium oxide composite colloidal particles having a particle size of from 4 to 50 nm, as the nucleic sol, and the composite colloid (B3) of tungsten oxide, stannic oxide and silicon dioxide, as the coating sol, are mixed, if the metal oxide in the coating sol is less than 1 part by weight, per 100 parts by weight of the metal oxide (SnO₂ or ZrO₂+SnO₂) in the nucleic sol, a stable sol cannot be obtained. This indicates that if the amount of composite colloid of tungsten oxide, stannic oxide and silicon dioxide, is inadequate, the coverage of the surface of the stannic oxide or stannic oxide/zirconium oxide composite colloidal particles, as nuclei, by the colloidal particles of such a composite tends to be inadequate, whereby flocculation of the formed colloidal particles is likely to take place, and the formed sol will be unstable. Accordingly, the amount of composite colloidal particles of tungsten oxide, stannic oxide and silicon dioxide, may be smaller than the amount to cover the entire surface of the stannic oxide or stannic oxide/zirconium oxide composite colloidal particles, but is at least the minimum amount required to form a stable sol of the modified stannic oxide or stannic oxide/zirconium oxide composite colloidal particles. When the composite colloidal particles of tungsten oxide, stannic oxide and silicon dioxide in an amount exceeding the amount to be used for such surface coverage, are used in the above mixing, the resulting sol will be nothing more than a stable mixed sol comprising a sol of the composite colloid of tungsten oxide, stannic oxide and silicon dioxide, and a sol of the formed modified stannic oxide or stannic oxide/zirconium oxide composite colloidal particles.

To modify the stannic oxide or stannic oxide/zirconium oxide composite colloidal particles by such surface coverage, the amount of the composite colloid (B3) of tungsten oxide, stannic oxide and silicon dioxide to be used is preferably at most 50 parts by weight as the metal oxide in the coating sol per 100 parts by weight of the metal oxide (SnO₂ or ZrO₂+SnO₂) in the nucleic sol.

When stannic oxide is used as nuclei, the present invention provides a process for producing a stable sol of modified stannic oxide colloidal particles, which comprises:
step (a1): a step of preparing a stannic oxide aqueous sol containing colloidal particles of stannic oxide having a particle size of from 4 to 50 nm at a concentration of from 1 to 50 wt% as SnO₂,
step (b1): a step of subjecting the stannic oxide aqueous sol obtained in the above step (a1) to aging under a pressure of from 0.1 to 40 MPa at a temperature of from 100 to 350°C for from 0.01 to 100 hours,
step (c1): a step of mixing the stannic oxide aqueous sol obtained in step (b1) and an alkylamine-containing Sb₂O₅ aqueous sol having a molar ratio of M/Sb₂O₅ (where M is an amine molecule) being from 0.02 to 4.00 and a particle size of from 1 to 20 nm, in a weight ratio of Sb₂O₅/SnO₂ being from 0.01 to 0.50, as calculated as their metal oxides, and
step (d1): a step of aging the aqueous medium obtained in step (c1) at from 20 to 300°C for from 0.1 to 50 hours.

In a case where the sol obtained in the step (d1) contains anions, step (e1) may be added. Namely, step (e1) comprises contacting the modified stannic oxide aqueous sol obtained in (d1) with an anion exchanger to remove anions, followed by aging at from 20 to 300°C for from 0.1 to 50 hours, whereby a stable sol of the modified stannic oxide colloidal particles will be obtained. The aging at a temperature of 100°C or higher may be carried out by means of an autoclave. This sol is a sol containing modified stannic oxide colloidal particles having a particle size of from 4.5 to 60 nm and comprising stannic oxide colloidal particles (A1) having a particles size of from 4 to 50 nm, as nuclei, and, as applied on their surface, the alkylamine-containing Sb₂O₅ colloidal particles (B1) having a molar ratio of M/Sb₂O₅ (where M is an amine molecule) being from 0.02 to 4.00 and a particle size of from 1 to 20 nm, wherein the weight ratio of (B1)/(A1) is from 0.01 to 0.50 on the basis of the weight ratio of their metal oxides.

Further, in a case where stannic oxide/zirconium oxide composite colloidal particles are used as nuclei, the present invention provides a process for producing a stable sol of modified stannic oxide/zirconium oxide composite colloidal particles, which comprises:
step (a2): a step of preparing an aqueous sol of stannic oxide/zirconium oxide composite colloid having a particle size of from 4 to 50 nm by mixing a stannic oxide aqueous sol having a particle size of from 4 to 50 nm and a SnO₂ concentration of from 0.5 to 50 wt% and an aqueous solution of an oxyzirconium salt having a concentration of from 0.1 to 50 wt% as calculated as ZrO₂, in a weight ratio of from 0.001 to 0.50 as ZrO₂/SnO₂, and heating the obtained mixed solution at from 60 to 100°C for from 0.1 to 50 hours,
step (b2): a step of subjecting the stannic oxide/zirconium oxide composite aqueous sol obtained in the above step (a2) to aging under a pressure of from 0.1 to 40 MPa at a temperature of from 100 to 350°C for from 0.01 to 100 hours,
step (c2): a step of mixing the stannic oxide/zirconium oxide composite aqueous sol obtained in step (b2) and an alkylamine-containing Sb₂O₅ aqueous sol having a molar ratio of M/Sb₂O₅ (where M is an amine molecule) being from 0.02 to 4.00 and a particle size of from 1 to 20 nm, in a weight ratio of Sb₂O₅/SnO₂ being from 0.01 to 0.50, as calculated as their metal oxides, and
step (d2): a step of aging the aqueous medium obtained in step (c2) at from 20 to 300°C for from 0.1 to 50 hours.

This sol is a sol containing composite colloidal particles of modified stannic oxide particles and zirconium oxide particles, which have a particle size of from 4.5 to 60 nm and which comprises, as nuclei, composite colloidal particles (A2) of stannic oxide particles and zirconium oxide particles, having a particle size of from 4 to 50 nm and a weight ratio of oxides ZrO₂:SnO₂ being from 0.05:1 to 0.50:1, and, as applied on their surface, the alkylamine-containing Sb₂O₅ colloidal particles (B1) having a particle size of from 1 to 20 nm and a molar ratio of M/Sb₂O₅ (where M an amine molecule) being from 0.02 to 4.00, wherein the weight ratio of (B1)/(A) is from 0.01 to 0.50 on the basis of the weight ratio of their metal oxides.

In a case where the sol obtained in step (d2) contains anions, step (e2) may be added. Namely, step (e2) comprises contacting the modified stannic oxide aqueous sol obtained in step (d2) with an anion exchanger to remove anions present in the sol, followed by aging at from 20 to 300°C for from 0.1 to 50 hours, whereby a stable sol of the modified stannic oxide/zirconium oxide composite colloidal particles can be obtained. The aging at a temperature of 100°C or higher may be carried out by means of an autoclave. This sol is a sol containing composite colloidal particles of modified stannic oxide particles and zirconium oxide particles, which have a particle size of from 4.5 to 60 nm and which comprise, as nuclei, stannic oxide/zirconium oxide composite colloidal particles (A2) having a particle size of from 4 to 50 nm, and, as applied on their surfaces, the alkylamine-containing Sb₂O₅ colloidal particles (B1) having a particle size of from 1 to 20 nm and a molar ratio of M/Sb₂O₅ (where M is an amine molecule) being from 0.02 to 4.00, wherein the weight ratio of (B1)/(A2) is from 0.01 to 0.50 on the basis of the weight ratio of their metal oxides.

Further, in a case where an aqueous sol containing composite colloidal particles of diantimony pentoxide and silicon dioxide, is used as the covering material, the present invention provides a process for producing a stable sol of modified stannic oxide colloidal particles, which comprises:
step (a3): a step of preparing a stannic oxide aqueous sol containing colloidal particles of stannic oxide having a particle size of from 4 to 50 nm at a concentration of from 1 to 50 wt% as SnO₂,
step (b3): a step of subjecting the stannic oxide aqueous sol obtained in the above step (a3) to aging under a pressure of from 0.1 to 40 MPa at a temperature of from 100 to 350°C for from 0.01 to 100 hours,
step (c3): a step of mixing the stannic oxide aqueous sol obtained in step (b3) and an aqueous sol containing composite colloidal particles of diantimony pentoxide and silicon dioxide having a molar ratio of SiO₂/Sb₂O₅ being from 0.55 to 55 and a particle size of at most 5 nm, in a weight ratio of (Sb₂O₅+SiO₂)/SnO₂ being from 0.01 to 0.50, as calculated as their metal oxides, and
step (d3): a step of aging the aqueous medium obtained in step (c3) at from 20 to 300°C for from 0.1 to 50 hours.

In a case where the sol obtained in step (d3) contains anions, step (e3) may be added. Namely, step (e3) comprises contacting the modified stannic oxide aqueous sol obtained in step (d3) with an anion exchanger to remove anions present in the sol, followed by aging at from 20 to 300°C for from 0.1 to 50 hours, whereby a stable sol of the modified stannic oxide colloidal particles can be obtained. Aging at a temperature of 100°C or higher may be carried out by means of an autoclave. This sol is a sol containing modified stannic oxide particles which have a particle size of from 4.5 to 60 nm and which comprise, as nuclei, stannic oxide colloidal particles (A1) having a particle size of from 4 to 50 nm, and, as applied on their surface, composite colloidal particles (B2) of diantimony pentoxide and silicon dioxide, having a particle size of at most 5 nm and a molar ratio of SiO₂/Sb₂O₅ being from 0.55 to 55, wherein the weight ratio of (B2)/(A1) is from 0.01 to 0.50 on the basis of the weight ratio of their metal oxides.

Further, in a case where an aqueous sol containing composite colloidal particles of diantimony pentoxide and silicon dioxide, is used as the covering material, the present invention provides a process for producing a stable sol of modified stannic oxide/zirconium oxide composite colloidal particles, which comprises:
step (a4): a step of preparing an aqueous sol of stannic oxide/zirconium oxide composite colloid having a particle size of from 4 to 50 nm by mixing a stannic oxide aqueous sol having a particle size of from 4 to 50 nm and a SnO₂ concentration of from 0.5 to 50 wt% and an aqueous solution of an oxyzirconium salt having a concentration of from 0.1 to 50 wt% as calculated as ZrO₂, in a weight ratio of from 0.001 to 0.50 as ZrO₂/SnO₂, and heating the obtained mixed solution at from 60 to 100°C for from 0.1 to 50 hours,
step (b4): a step of subjecting the stannic oxide/zirconium oxide composite aqueous sol obtained in the above step (a4) to hydrothermal treatment under a pressure of from 0.1 to 40 MPa at a temperature of from 100 to 350°C for from 0.01 to 100 hours,
step (c4): a step of mixing the stannic oxide/zirconium oxide composite aqueous sol obtained in step (b4) and an aqueous sol containing composite colloidal particles of diantimony pentoxide and silicon dioxide having a molar ratio of SiO₂/Sb₂O₅ being from 0.55 to 55 and a particle size of at most 5 nm, in a weight ratio of (Sb₂O₅+SiO₂)/(SnO₂+ZrO₂) being from 0.01 to 0.50, as calculated as their metal oxides, and
step (d4): a step of aging the aqueous medium obtained in step (c4) at from 20 to 300°C for from 0.1 to 50 hours.

In a case where the sol obtained in step (d4) contains anions, step (e4) may be added. Namely, step (e4) comprises contacting the aqueous sol of the modified stannic oxide/zirconium oxide composite colloidal particles obtained in step (d4) with an anion exchanger to remove anions present in the sol, followed by aging at from 20 to 300°C for from 0.1 to 50 hours, whereby a stable sol of the modified stannic oxide/zirconium oxide composite colloidal particles can be obtained. Aging at a temperature of 100°C or higher may be carried out by means of an autoclave. This sol is a sol containing modified stannic oxide/zirconium oxide composite colloidal particles, which have a particle size of from 4.5 to 60 nm and which comprise, as nuclei, stannic oxide/zirconium oxide composite colloidal particles (A2) having a particle size of from 4 to 50 nm, and, as applied on their surface, composite colloidal particles (B2) of diantimony pentoxide and silicon dioxide, having a particle size of at most 5 nm and a molar ratio of SiO₂/Sb₂O₅ being from 0.55 to 55, wherein the weight ratio of (B2)/(A2) is from 0.01 to 0.50 on the basis of the weight ratio of their metal oxides.

Further, in a case where a tungsten oxide/stannic oxide/silicon dioxide composite aqueous sol is used as the covering material, the present invention provides a process for producing a stable sol of modified stannic oxide colloidal particles, which comprises:
step (a5): a step of preparing a stannic oxide aqueous sol containing colloidal particles of stannic oxide having a particle size of from 4 to 50 nm at a concentration of from 1 to 50 wt% as SnO₂,
step (b5): a step of subjecting the stannic oxide aqueous sol obtained in the above step (a5) to hydrothermal treatment under a pressure of from 0.1 to 40 MPa at a temperature of from 100 to 350°C for from 0.01 to 100 hours,
step (c5): a step of mixing the stannic oxide aqueous sol obtained in step (b5) and an aqueous sol containing composite colloidal particles of tungsten oxide/stannic oxide/silicon dioxide having a particle size of from 2 to 7 nm, a weight ratio of WO₃/SnO₂ being from 0.1 to 100 and a weight ratio of SiO₂/SnO₂ being from 0.1 to 100, in a weight ratio of (SnO₂+WO₃+SiO₂)/SnO₂ being from 0.01 to 0.50, as calculated as their metal oxides, and
step (d5): a step of aging the aqueous medium obtained in step (c5) at from 20 to 300°C for from 0.1 to 50 hours.

In a case where the sol obtained in step (d5) contains anions, step (e5) may be added. Namely, step (e5) comprises contacting the aqueous sol of the modified stannic oxide composite colloidal particles obtained in step (d5) with an anion exchanger to remove anions present in the sol, followed by aging at from 20 to 300°C for from 0.1 to 50 hours, whereby a stable sol of the modified stannic oxide colloidal particles can be obtained. Aging at a temperature of 100°C or higher may be carried out by means of an autoclave. This sol is a sol containing modified stannic oxide colloidal particles, which have a particle size of from 4.5 to 60 nm and which comprise, as nuclei, stannic oxide colloidal particles (A1) having a particle size of from 4 to 50 nm, and, as applied on their surface, tungsten oxide/stannic oxide/silicon dioxide composite colloidal particles (B3) having a particle size of from 2 to 7 nm and having a weight ratio of WO₃/SnO₂ being from 0.1 to 100 and a weight ratio of SiO₂/SnO₂ being from 0.1 to 100, wherein the weight ratio of (B3)/(A1) is from 0.01 to 0.50 on the basis of the weight ratio of their metal oxides.

Further, in a case where a tungsten oxide/stannic oxide/silicon dioxide composite aqueous sol is used as the covering material, the present invention provides a process for producing a stable sol of modified stannic oxide/zirconium oxide composite colloidal particles, which comprises:
step (a6): a step of preparing an aqueous sol of stannic oxide/zirconium oxide composite colloid having a particle size of from 4 to 50 nm by mixing a stannic oxide aqueous sol having a particle size of from 4 to 50 nm and a SnO₂ concentration of from 0.5 to 50 wt% and an aqueous solution of an oxyzirconium salt having a concentration of from 0.1 to 50 wt% as calculated as ZrO₂, in a weight ratio of from 0.001 to 0.50 as ZrO₂/SnO₂, and heating the obtained mixed solution at from 60 to 100°C for from 0.1 to 50 hours,
step (b6): a step of subjecting the stannic oxide/zirconium oxide composite aqueous sol obtained in the above step (a6) to hydrothermal treatment under a pressure of from 0.1 to 40 MPa at a temperature of from 100 to 350°C for from 0.01 to 100 hours,
step (c6): a step of mixing the stannic oxide/zirconium oxide composite aqueous sol obtained in step (b6) and an aqueous sol containing composite colloidal particles of tungsten oxide/stannic oxide/silicon dioxide having a particle size of from 2 to 7 nm, a weight ratio of WO₃/SnO₂ being from 0.1 to 100 and a weight ratio of SiO₂/SnO₂ being from 0.1 to 100, in a weight ratio of (SnO₂+WO₃+SiO₂)/(SnO₂+ZrO₂) being from 0.01 to 0.50, as calculated as their metal oxides, and
step (d6): a step of aging the aqueous medium obtained in step (c6) at from 20 to 300°C for from 0.1 to 50 hours.

In a case where the sol obtained in step (d6) contains anions, step (e6) may be added. Namely, step (e6) comprises contacting the aqueous sol of modified stannic oxide/zirconium oxide composite colloidal particles obtained in step (d6) with an anion exchanger to remove anions present in the sol, followed by aging at from 20 to 300°C for from 0.1 to 50 hours, whereby a stable sol of modified stannic oxide/zirconium oxide composite colloidal particles can be obtained. Aging at a temperature of 100°C or higher may be carried out by means of an autoclave. This sol is a sol containing modified stannic oxide/zirconium oxide composite colloidal particles, which have a particle size of from 4.5 to 60 nm and which comprise, as nuclei, stannic oxide/zirconium oxide composite colloidal particles (A2) having a particle size of from 4 to 50 nm, and, as applied on their surface, tungsten oxide/stannic oxide/silicon dioxide composite colloidal particles (B3) having a particle size of from 2 to 7 nm and having a weight ratio of WO₃/SnO₂ being from 0.1 to 100 and a weight ratio SiO₂/SnO₂ being from 0.1 to 100, wherein the weight ratio of (B3)/(A2) is from 0.01 to 0.50 on the basis of the weight ratio of their metal oxides.

The processes for producing sols of the present invention include a case where the particles to be used as nuclei are stannic oxide and a case where a stannic oxide/zirconium oxide composite sol is used. The former has a rutile-type crystal structure, and one formed by applying such a sol as a coating composition, followed by baking, has a high refractive index (the refractive index calculated from the coating film is at least 1.9) and excellent transparency. The latter has, in addition to the performance of the former, excellent weather (light) resistance performance as having zirconium oxide combined.

The aqueous sol of modified stannic oxide colloidal particles or the aqueous sol of modified stannic oxide/zirconium oxide composite colloid of the present invention has a pH of from 3 to 11.5. If the pH is lower than 3, such a sol tends to be unstable. On the other hand, if the pH exceeds 11.5, the diantimony pentoxide colloidal particles, the composite colloidal particles of diantimony pentoxide and silicon dioxide, or the composite colloidal particles of tungsten oxide, stannic oxide and silicon dioxide, covering the modified stannic oxide colloidal particles or modified stannic oxide/zirconium oxide composite colloidal particles, tend to be dissolved in the liquid. Further, if the total concentration of all metal oxides in the sol of the modified stannic oxide colloidal particles or the modified stannic oxide/zirconium oxide composite colloidal particles, exceeds 60 wt%, such a sol tends to be unstable. The concentration preferred as an industrial product is from about 10 to 50 wt%.

The modified metal oxide sol of the present invention may contain other optional components so long as the object of the present invention can be accomplished. Particularly, when an oxycarboxylic acid is incorporated in an amount of at most about 30 wt%, based on the total amount of all metal oxides, it is possible to obtain a colloid having the performance such as dispersibility further improved. The oxycarboxylic acid to be used may, for example, be lactic acid, tartaric acid, citric acid, gluconic acid, malic acid or glycolic acid. Further, an alkali component may be incorporated. For example, a hydroxide of an alkali metal such as Li, Na, K, Rb or Cs, NH₄, an alkylamine such as ethylamine, triethylamine, isopropylamine or n-propylamine, an aralkylamine such as benzylamine, an alicyclic amine such as piperidine or an alkanolamine such as monoethanolamine or triethanolamine, may, for example, be mentioned. These alkali components may be incorporated in combination as a mixture of two or more of them. Further, they may be used in combination with the above-mentioned acidic component. These components may be incorporated in an amount of at most about 30 wt% based on the total amount of all metal oxides.

When it is desired to further increase the sol concentration, it can be concentrated up to the maximum of about 60 wt% by a usual method, such as an evaporation method or an ultrafiltration method. Further, when it is desired to control the pH of the sol after the concentration, the above alkali metal, an organic base (amine) or an oxycarboxylic acid may, for example, be added to the sol. Particularly, a sol wherein the total concentration of metal oxides is from 10 to 40 wt%, is practically preferred. When the ultrafiltration method is employed as the concentration method, polyanions, extremely fine particles, etc. present in the sol will pass together with water through the ultrafiltration filter, whereby it is possible to remove from the sol such polyanions, extremely small particles, etc. which cause instability of the sol.

In a case where the modified metal oxide colloid obtained by the above mixing is an aqueous sol, it is possible to obtain an organosol by substituting a hydrophilic organic solvent for the water medium of such an aqueous sol. Such substitution may be carried out by a usual method such as a distillation method or an ultrafiltration method. Such a hydrophilic organic solvent may, for example, be a lower alcohol such as methyl alcohol, ethyl alcohol or isopropyl alcohol, a linear amide such as dimethylformamide or N,N'-dimethylacetamide, a cyclic amide such as N-methyl-2-pyrrolidone, or a glycol such as ethyl cellosolve or ethylene glycol.

Now, the present invention will be described in further detail with reference to Examples. However, it should be understood that the present invention is by no means restricted to such specific Examples.

### PREPARATION OF NUCLEIC SOL

### A-1: PREPARATION OF STANNIC OXIDE SOL

37.5 kg of oxalic acid ((COOH)₂·2H₂O) was dissolved in 383 kg of pure water, and the oxalic acid solution was put into 500 L vessel and heated to 70°C with stirring. Then, 150 kg of a 35% hydrogen peroxide aqueous solution and 75 kg of metallic tin (AT-SNNO200N, manufactured by YAMAISHIMETALS CO., LTD.) were added thereto.

The additions of the hydrogen peroxide aqueous solution and metallic tin were alternately carried out. Firstly, 10 kg of the 35% hydrogen peroxide aqueous solution, and then, 5 kg of metallic tin, were added. After waiting until the reaction completed (for from 5 to 10 minutes), this operation was repeated. After adding all the amount, 10 kg of a 35% hydrogen peroxide aqueous solution was further added. The time required for the addition was 2.5 hours, and after completion of the addition, the mixture was further heated at 95°C for one hour to complete the reaction. The molar ratio of the hydrogen peroxide aqueous solution to metallic tin was 2.61 as H₂O₂/Sn.

The obtained stannic oxide sol had excellent transparency. The amount of this stannic oxide sol was 630 kg. The specific gravity was 1.154, and the pH was 1.51. The concentration was 14.7 wt% as SnO₂.

The obtained sol was observed by an electron microscope and found to be spherical particles of from 10 to 15 nm having good dispersibility. This sol showed a slight increase in the viscosity when left to stand. However, when left to stand at room temperature for six months, it was stable and no gelation was observed.

To 629 kg of the obtained sol, 231 kg of a 35% hydrogen peroxide aqueous solution and 52 kg of pure water were added for dilution so that concentration would be 10 wt% as SnO₂, and the H₂O₂/(COOH)₂ molar ratio to oxalic acid when charged, would be 8.0, followed by heating to 95°C and aging for 5 hours. By this operation, the contained oxalic acid was decomposed into carbon dioxide gas and water by the reaction with hydrogen peroxide. The obtained stannic oxide slurry was cooled to about 40°C, and then, 2.7 kg of isopropylamine was added for peptization, whereupon it was passed and recycled through a catalyst column packed with about 15 L of a platinum-type catalyst (N-220, manufactured by SUD-CHEMIE CATALYSTS JAPAN, INC.) to carry out decomposition treatment of excess hydrogen peroxide. The passing through speed was about 30 L/min, and recycling was carried out for 5 hours. Further, it was passed though a column packed with an anion exchange resin (Amberlite IRA-410) to obtain 1,545 kg of an alkaline stannic oxide sol. The specific surface area of the obtained sol was 121 m²/g.

### B. PREPARATION OF COVERING MATERIAL

### B-1-1: PREPARATION OF ALKALI COMPONENT-CONTAINING DIANTIMONY PENTOXIDE COLLOID

Into a 100 L vessel, 12.5 kg of diantimony trioxide (containing 99.5% as Sb₂O₃, manufactured by Kanton Mikuni), 66.0 kg of pure water and 12.5 kg of potassium hydroxide (containing 95% as KOH) were added, and 8.4 kg of a 35% hydrogen peroxide aqueous solution was gradually added with stirring. The obtained potassium antimonate aqueous solution contained 15.25 wt% of Sb₂O₅ and 5.36 wt% of potassium hydroxide and had a molar ratio of K₂O/Sb₂O₅ being 1.0.

The obtained aqueous solution of potassium antimonate was diluted to 2.5 wt% and passed through a column packed with a hydrogen-type cation exchange resin. To the solution of antimonic acid after the ion exchange, diisopropylamine was added in an amount of 6.6 kg with stirring to obtain an alkali component-containing diantimony pentoxide colloid solution. The concentration was 1.8 wt% as Sb₂O₅ and 1.2 wt% as diisopropylamine, and the molar ratio of diisopropylamine/Sb₂O₅ was 1.69. The primary particle size was from 1 to 10 nm, as observed by a transmission electron microscope.

### B-1-2: PREPARATION OF ALKALI COMPONENT-CONTAINING DIANTIMONY PENTOXIDE COLLOID

Into a 100 L vessel, 12.5 kg of diantimony trioxide (containing 99.5% as Sb₂O₅, manufactured by Kanton Mikuni), 66.0 kg of pure water and 12.5 kg of potassium hydroxide (containing 95% as KOH) were added, and 8.4 kg of a 35% hydrogen peroxide solution was gradually added with stirring. The obtained potassium antimonate solution had a concentration of 15.25 wt% as Sb₂O₅ and 5.36 wt% as potassium hydroxide, and the molar ratio of K₂O/Sb₂O₅ was 1.0.

17.6 kg of the obtained aqueous solution of potassium antimonate was diluted to 2.2 wt% and passed through a column packed with a hydrogen-type cation exchange resin. To the solution of antimonic acid after the ion exchange, 0.25 kg of diisobutylamine was added with stirring to obtain an alkali component-containing diantimony pentoxide colloid solution. The concentration was 1.8 wt% as Sb₂O₅ and 1.36 wt% as diisobutylamine, and the molar ratio of diisopropylamine/Sb₂O₅ was 1.79. The primary particle size was from 1 to 10 nm as observed by a transmission electron microscope.

### B-2-1 PREPARATION OF DIANTIMONY PENTOXIDE/SILICON DIOXIDE COMPOSITE COLLOID

546 g of an aqueous potassium silicate solution (containing 15.4 wt% as SiO₂) was diluted with 542 g of pure water, and then, an aqueous potassium antimonate solution (containing 14.6 wt% as Sb₂O₅) was mixed with stirring, followed by stirring for one hour, to obtain a mixed aqueous solution of potassium silicate and potassium antimonate.

The obtained mixed aqueous solution of potassium silicate and potassium antimonate was diluted with water to a concentration of 5 wt% and then passed through a column packed with a cation exchange resin to obtain a diantimony pentoxide/silicon dioxide composite colloid.

### B-3-1: PREPARATION OF TUNGSTEN OXIDE/STANNIC OXIDE/SILICON DIOXIDE COMPOSITE COLLOID

38.9 kg of No.3 sodium silicate solution (containing 29.3 wt% as SiO₂ was dissolved in 830 kg of pure water, and then, 12.2 kg of sodium tungstate Na₂WO₄·2H₂O (containing 69.8 wt% as WO₃) and 15.3 kg of sodium stannate NaSnO₃·H₂O (containing 55.7 wt% as SnO₂) were dissolved. Then, this solution was passed through a column of hydrogen-type cation exchange resin (IR-120B) to obtain 1,201 kg of an acidic tungsten oxide/stannic oxide/silicon dioxide composite sol (pH 2.2, containing 0.7 wt% as WO₃, 0.7 wt% as SnO₂ and 0.9 wt% as SiO₂, weight ratio of WO₃/SnO₂: 1.0, weight ratio of SiO₂/SnO₂: 1.33).

### EXAMPLE 1

Step (a): An alkaline stannic oxide aqueous sol (A-1) having a particle size of at most 15 nm and a SnO₂ concentration of 3.7 wt%, was obtained.
Step (b): 2,000 kg of the alkaline stannic oxide sol obtained in step (a) was subjected to heat treatment at a treating temperature of 310°C under a treating pressure of 20 MPa (megapascal) at an average flow rate of 538 g/ml. The specific surface area was 61 m²/g.
   Then, demineralization treatment was carried out at room temperature by a filtration apparatus provided with an ultrafiltration filter. The obtained stannic oxide sol had a specific gravity of 1.064, a pH of 9.98 and a SnO₂ concentration of 11.7%.
Step (c): To 62 kg of the aqueous sol (containing 7.25 kg as SnO₂) obtained in step (b), the amine component-containing diantimony pentoxide colloid prepared in B-1-2 was added in an amount of 22.2 kg with stirring and mixed in a weight ratio of [(B-1-2) calculated as the metal oxide]/SnO₂ being 0.055.
Step (d): The aqueous medium obtained in step (c) was heated and aged at 95°C for two hours. Then, the obtained aqueous medium was passed through a column packed with a hydroxyl group-type anion exchange resin. The obtained aqueous sol of stannic oxide covered with diantimony pentoxide (dilute liquid) was concentrated at room temperature by a filtration apparatus provided with an ultrafiltration filter having a fractional molecular weight of 100,000, to obtain 26.1 kg of a highly concentrated aqueous sol of stannic oxide covered with diantimony pentoxide. This sol had a specific gravity of 1.328, a pH of 10.65 and a concentration of 29.1 wt% as calculated as the metal oxide, and was stable.

### EXAMPLE 2

Step (c): To 5,983 g of the aqueous sol (containing 700 g as SnO₂) obtained in step (b) in Example 1, 2,188 g of the amine component-containing diantimony pentoxide colloid prepared in B-1-1 was added with stirring and mixed in a weight ratio of [(B-1-1) calculated as the metal oxide]/SnO₂ being 0.05.
Step (d): The aqueous medium obtained in step (c) was heated and aged at 95°C for two hours. Then, the obtained aqueous medium was passed through a column packed with a hydroxyl group-type anion exchange resin. The obtained aqueous sol (dilute sol) of stannic oxide covered with the diantimony pentoxide colloid, was concentrated at room temperature by a filtration apparatus provided with an ultrafiltration filter having a fractional molecular weight of 100,000, to obtain 3,062 g of a highly concentrated aqueous sol of stannic oxide covered with diantimony pentoxide.

The above highly concentrated aqueous sol of stannic oxide covered with diantimony pentoxide was subjected to a rotary evaporator to distill off water while 35 L of methanol was gradually added, whereby 2,390 g of a methanol sol of stannic oxide covered with diantimony pentoxide colloid, having water of the aqueous sol substituted by methanol, was obtained. This sol had a specific gravity of 1.092, a pH of 9.3 (a mixture with the same weight of water), a viscosity of 1.3 c.p., a concentration of 30 wt% as calculated as the metal oxide, and a particle size of from 10 to 15 nm as observed by an electron microscope. This sol showed a colloidal color and had a high transparency, and even after being left to stand at room temperature for three months, it showed no abnormality such as formation of precipitates, turbidity or viscosity increase, and it was stable. Further, the refractive index of a dried product of this sol was 1.9.

### EXAMPLE 3

Step (a): 20.8 g of zirconium ammonium carbonate (2.8 g as ZrO₂) was added and mixed to 2,500 g of an alkaline stannic oxide aqueous sol (A-1) having a particle size of at most 15 nm and a SnO₂ concentration of 3.7 wt% (containing 92.5 g as SnO₂), and stirring was continued for 30 minutes. Further, this mixed liquid was heated and aged at 100°C for 3 hours. The mixed liquid was a sol of a stannic oxide/zirconium oxide composite colloid having a weight ratio of ZrO₂/SnO₂ being 0.03, showing a colloidal color and having good transparency, and 2,480 g was obtained. This sol had 3.25 wt% as SnO₂, 0.09 wt% as ZrO₂ and 3.34 wt% as SnO₂+ZrO₂.
Step (b): The stannic oxide/zirconium oxide composite sol obtained in step (a) was subjected to hydrothermal treatment at a treating temperature of 240°C under a treating pressure of 3.5 MPa. The specific surface area of the obtained sol was 57 m²/g.
Step (c): To 2,480 g of the aqueous sol of stannic oxide/zirconium oxide composite colloidal particles obtained in step (b) (containing 83 g as SnO₂+ZrO₂), 244 g of the amine component-containing diantimony pentoxide colloid prepared in B-1-1 was added with stirring and mixed in a weight ratio of [(B-1-1) as calculated as the metal oxide]/(SnO₂+ZrO₂) being 0.05.
Step (d): The aqueous medium obtained in step (c) was heated and aged at 95°C for two hours and then concentrated at room temperature by a filtration apparatus provided with an ultrafiltration filter having a fractional molecular weight of 100,000, to obtain a highly concentrated composite colloid of stannic oxide/zirconium oxide covered with diantimony pentoxide.

The above highly concentrated composite colloid of stannic oxide/zirconium oxide covered with diantimony pentoxide was subjected to a rotary evaporator to distill off water under reduced pressure while 8 L of methanol was gradually added, to obtain 133 g of a methanol sol of a composite colloid of stannic oxide/zirconium oxide covered with diantimony pentoxide colloid, having water of the aqueous sol substituted by methanol. This sol had a specific gravity of 1.082, a pH of 8.5 (a mixture with an equal weight of water), a viscosity of 1.8 c.p. and a concentration of 30 wt% as calculated as the metal oxide, and the particle size was from 10 to 15 nm as observed by an electron microscope. This sol showed a colloidal color and had high transparency, and even after being left at room temperature for three months, it showed no abnormality such as formation of precipitates, turbidity or viscosity increase, and it was stable. Further, the refractive index of a dried product of this sol was 1.9.

### EXAMPLE 4

Step (c): To 876 g of a colloidal aqueous solution of the diantimony pentoxide/silicon dioxide composite (containing 25.3 g as Sb₂O₅+SiO₂) prepared in B-2-1, one having 3,077 g of the aqueous sol obtained in step (b) in Example 1 (containing 360 g as SnO₂) diluted with 3,000 g of pure water with stirring, was added with stirring and mixed in a weight ratio of [(B-2-1) as calculated as the metal oxide]/(SnO₂) being 0.07.
Step (d): The aqueous medium obtained in Step (c) was heated and aged at 95°C for two hours.

The obtained aqueous sol (dilute solution) of stannic oxide covered with the diantimony pentoxide/silicon dioxide composite colloid, was concentrated at room temperature by a filtration apparatus provided with an ultrafiltration filter having a fractional molecular weight of 100,000, to obtain 1,900 g of a highly concentrated aqueous sol of stannic oxide covered with diantimony pentoxide/silicon dioxide composite colloid. The highly concentrated aqueous sol of stannic oxide covered with the diantimony pentoxide/silicon dioxide composite colloid, was subjected to a rotary evaporator to distill off water under reduced pressure while 22 L of methanol was gradually added to obtain 1,180 g of methanol sol of stannic oxide covered with the diantimony pentoxide/silicon dioxide composite colloid, having water of the aqueous sol substituted by methanol. This sol had a specific gravity of 1.090, a pH of 8.2 (a mixture of an equal weight amount of water), a viscosity of 1.6 c.p., a concentration of 30 wt% as calculated as the metal oxide and a particle size of from 10 to 15 nm as observed by an electron microscope. This sol showed a colloidal color and had a high transparency, and even after being left at room temperature for three months, it showed no abnormality such as formation of precipitates, turbidity or viscosity increase, and it was stable. Further, the refractive index of a dried product of this sol was 1.9.

### EXAMPLE 5

Step (c): To 1,957 g of the tungsten oxide/stannic oxide/silicon dioxide composite colloidal aqueous solution prepared in B-3-1 (containing 45.0 g as WO₃+SnO₂+SiO₂), 2,564 g of the aqueous sol (containing 300 g as SnO₂) obtained in step (b) in Example 1 was added with stirring and mixed in a weight ratio of [(B-3-1) as calculated as the metal oxide]/(SnO₂) being 0.15.
Step (d): The aqueous medium obtained in step (c) was heated and aged at 95°C for two hours.

The obtained aqueous sol (dilute solution) of stannic oxide covered with the tungsten oxide/stannic oxide/silicon dioxide composite colloid, was concentrated at room temperature by a filtration apparatus provided with an ultrafiltration filter having a fractional molecular weight of 100,000, to obtain 1,327 g of a highly concentrated aqueous sol of stannic oxide covered with the tungsten oxide/stannic oxide/silicon dioxide composite colloid. The highly concentrated aqueous sol of stannic oxide covered with the tungsten oxide/stannic oxide/silicon dioxide colloid, was subjected to a rotary evaporator to distill off water under a reduced pressure while 27 L of methanol was gradually added, to obtain 1,080 g of a methanol sol of stannic oxide covered with the tungsten oxide/stannic oxide/silicon dioxide composite colloid, having water of the aqueous sol substituted by methanol. This sol had a specific gravity of 1.130, a pH of 7.3 (a mixture with an equal weight amount of water), a viscosity of 3.9 c.p., a concentration of 31 wt% as calculated as the metal oxide, and a particle size of from 10 to 15 nm as observed by an electron microscope. This sol showed a colloidal color and had a high transparency, and even after being left to stand at room temperature for three months, it showed no abnormality such as formation of precipitates, turbidity or viscosity increase, and it was stable. Further, the refractive index of a dried product of this sol was 1.9.

### COLOR CHANGE TEST

The stannic oxide aqueous sol treated at a high temperature under high pressure, obtained in step (b) in Example 1 and the stannic oxide aqueous sol obtained in (A-1) were concentrated so that SnO₂ concentrations became from 4 wt% to 30 wt%. 15 ml of each of such concentrated sols was put into 20 ml container and sealed. This container was subjected to ultraviolet irradiation with a mercury lamp for 20 minutes. Thereafter, comparison of color fading of these sols was carried out. The sol obtained in step (b) in Example 1 showed a slightly blue color by the ultraviolet irradiation. However, when it was left to stand thereafter, the color faded and returned to the original slightly yellow-white color.

The sol obtained in (A-1) underwent a color change to strong yellow by the ultraviolet irradiation, and when it was left to stand thereafter, the color did not return to the original slightly yellow-white color.

The stannic oxide sol treated at a high temperature under high pressure, obtained in step (b) in Example 1 has high crystallinity, since it was subjected to hydrothermal treatment at a temperature of from 100 to 350°C under a pressure of from 0.1 to 40 MPa. Accordingly, as compared with the stannic oxide sol of (A-1), the specific surface area of the stannic oxide particles tends to be small. Stannic oxide is likely to undergo a color change by an oxidation-reduction action by ultraviolet rays, but as the specific surface area of the stannic oxide particles subjected to the high temperature high pressure treatment is small, it is considered that the proportion of the color change tends to be small, and thus the above evaluation results were obtained.

The entire disclosure of Japanese Patent Application No. 2004-343445 filed on September 29, 2004 including specification, claims, and summary is incorporated herein by reference in its entirety.

## Claims

1. A process for producing a stable sol of modified stannic oxide colloidal particles, which comprises the following steps (a1), (b1), (c1) and (d1):
step (a1): a step of preparing a stannic oxide aqueous sol containing colloidal particles of stannic oxide having a particle size of from 4 to 50 nm at a concentration of from 1 to 50 wt% as SnO₂,
step (b1): a step of subjecting the stannic oxide aqueous sol obtained in the above step (a1) to hydrothermal treatment under a pressure of from 0.1 to 40 MPa at a temperature of from 100 to 350°C for from 0.01 to 100 hours,
step (c1): a step of mixing the stannic oxide aqueous sol obtained in step (b1) and an alkylamine-containing Sb₂O₅ aqueous sol having a molar ratio of M/Sb₂O₅ (where M is an amine molecule) being from 0.02 to 4.00 and a particle size of from 1 to 20 nm, in a weight ratio of Sb₂O₅/SnO₂ being from 0.01 to 0.50, as calculated as their metal oxides, and
step (d1): a step of aging the aqueous medium obtained in step (c1) at from 20 to 300°C for from 0.1 to 50 hours.

2. A process for producing a stable sol of modified stannic oxide/zirconium oxide composite colloidal particles, which comprises the following steps (a2), (b2), (c2) and (d2):
step (a2): a step of preparing an aqueous sol of stannic oxide/zirconium oxide composite colloid having a particle size of from 4 to 50 nm by mixing a stannic oxide aqueous sol having a particle size of from 4 to 50 nm and a SnO₂ concentration of from 0.5 to 50 wt% and an aqueous solution of an oxyzirconium salt having a concentration of from 0.1 to 50 wt% as calculated as ZrO₂, in a weight ratio of from 0.001 to 0.50 as ZrO₂/SnO₂, and heating the obtained mixed solution at from 60 to 100°C for from 0.1 to 50 hours,
step (b2): a step of subjecting the stannic oxide/zirconium oxide composite aqueous sol obtained in the above step (a2) to hydrothermal treatment under a pressure of from 0.1 to 40 MPa at a temperature of from 100 to 350°C for from 0.01 to 100 hours,
step (c2): a step of mixing the stannic oxide/zirconium oxide composite aqueous sol obtained in step (b2) and an alkylamine-containing Sb₂O₅ aqueous sol having a molar ratio of M/Sb₂O₅ (where M is an amine molecule) being from 0.02 to 4.00 and a particle size of from 1 to 20 nm, in a weight ratio of Sb₂O₅/(SnO₂+ZrO₂) being from 0.01 to 0.50, as calculated as their metal oxides, and
step (d2): a step of aging the aqueous medium obtained in step (c2) at from 20 to 300°C for from 0.1 to 50 hours.

3. A process for producing a stable sol of modified stannic oxide colloidal particles, which comprises the following steps (a3), (b3), (c3) and (d3):
step (a3): a step of preparing a stannic oxide aqueous sol containing colloidal particles of stannic oxide having a particle size of from 4 to 50 nm at a concentration of from 1 to 50 wt% as SnO₂,
step (b3): a step of subjecting the stannic oxide aqueous sol obtained in the above step (a3) to hydrothermal treatment under a pressure of from 0.1 to 40 MPa at a temperature of from 100 to 350°C for from 0.01 to 100 hours,
step (c3): a step of mixing the stannic oxide aqueous sol obtained in step (b3) and an aqueous sol containing composite colloidal particles of diantimony pentoxide and silicon dioxide having a molar ratio of SiO₂/Sb₂O₅ being from 0.55 to 55 and a particle size of at most 5 nm, in a weight ratio of (Sb₂O₅+SiO₂)/SnO₂ being from 0.01 to 0.50, as calculated as their metal oxides, and
step (d3): a step of aging the aqueous medium obtained in step (c3) at from 20 to 300°C for from 0.1 to 50 hours.

4. A process for producing a stable sol of modified stannic oxide/zirconium oxide composite colloidal particles, which comprises the following steps (a4), (b4), (c4) and (d4):
step (a4): a step of preparing an aqueous sol of stannic oxide/zirconium oxide composite colloid having a particle size of from 4 to 50 nm by mixing a stannic oxide aqueous sol having a particle size of from 4 to 50 nm and a SnO₂ concentration of from 0.5 to 50 wt% and an aqueous solution of an oxyzirconium salt having a concentration of from 0.1 to 50 wt% as calculated as ZrO₂, in a weight ratio of from 0.001 to 0.50 as ZrO₂/SnO₂, and heating the obtained mixed solution at from 60 to 100°C for from 0.1 to 50 hours,
step (b4): a step of subjecting the stannic oxide/zirconium oxide composite aqueous sol obtained in the above step (a4) to hydrothermal treatment under a pressure of from 0.1 to 40 MPa at a temperature of from 100 to 350°C for from 0.01 to 100 hours,
step (c4): a step of mixing the stannic oxide/zirconium oxide composite aqueous sol obtained in step (b4) and an aqueous sol containing composite colloidal particles of diantimony pentoxide and silicon dioxide having a molar ratio of SiO₂/Sb₂O₅ being from 0.55 to 55 and a particle size of at most 5 nm, in a weight ratio of (Sb₂O₅+SiO₂)/(SnO₂+ZrO₂)being from 0.01 to 0.50, as calculated as their metal oxides, and
step (d4): a step of aging the aqueous medium obtained in step (c4) at from 20 to 300°C for from 0.1 to 50 hours.

5. A process for producing a stable sol of modified stannic oxide colloidal particles, which comprises the following steps (a5), (b5), (c5) and (d5):
step (a5): a step of preparing a stannic oxide aqueous sol containing colloidal particles of stannic oxide having a particle size of from 4 to 50 nm at a concentration of from 1 to 50 wt% as SnO₂,
step (b5): a step of subjecting the stannic oxide aqueous sol obtained in the above step (a5) to hydrothermal treatment under a pressure of from 0.1 to 40 MPa at a temperature of from 100 to 350°C for from 0.01 to 100 hours,
step (c5): a step of mixing the stannic oxide aqueous sol obtained in step (b5) and an aqueous sol containing composite colloidal particles of tungsten oxide/stannic oxide/silicon dioxide having a particle size of from 2 to 7 nm, a weight ratio of WO₃/SnO₂ being from 0.1 to 100 and a weight ratio of SiO_{2/}SnO₂ being from 0.1 to 100, in a weight ratio of (SnO₂+WO₃+SiO₂)/SnO₂ being from 0.01 to 0.50, as calculated as their metal oxides, and
step (d5): a step of aging the aqueous medium obtained in step (c5) at from 20 to 300°C for from 0.1 to 50 hours.

6. A process for producing a stable sol of modified stannic oxide/zirconium oxide composite colloidal particles, which comprises the following steps (a6), (b6), (c6) and (d6):
step (a6): a step of preparing an aqueous sol of stannic oxide/zirconium oxide composite colloid having a particle size of from 4 to 50 nm by mixing a stannic oxide aqueous sol having a particle size of from 4 to 50 nm and a SnO₂ concentration of from 0.5 to 50 wt% and an aqueous solution of an oxyzirconium salt having a concentration of from 0.1 to 50 wt% as calculated as ZrO₂, in a weight ratio of from 0.001 to 0.50 as ZrO₂/SnO₂, and heating the obtained mixed solution at from 60 to 100°C for from 0.1 to 50 hours,
step (b6): a step of subjecting the stannic oxide/zirconium oxide composite aqueous sol obtained in the above step (a6) to hydrothermal treatment under a pressure of from 0.1 to 40 MPa at a temperature of from 100 to 350°C for from 0.01 to 100 hours,
step (c6): a step of mixing the stannic oxide/zirconium oxide composite aqueous sol obtained in step (b6) and an aqueous sol containing composite colloidal particles of tungsten oxide/stannic oxide/silicon dioxide having a particle size of from 2 to 7 nm, a weight ratio of WO₃/SnO₂ being from 0.1 to 100 and a weight ratio of SiO₂/SnO₂ being from 0.1 to 100, in a weight ratio of (SnO₂+WO₃+SiO₂)/(SnO₂+ZrO₂) being from 0.01 to 0.50, as calculated as their metal oxides, and
step (d6): a step of aging the aqueous medium obtained in step (c6) at from 20 to 300°C for from 0.1 to 50 hours.
